# EUROPEAN PATENT SPECIFICATION

(11) **EP 4 002 020 B1**
(45) Date of publication and mention of the grant of the patent: **25.02.2026**
(21) Application number: 20207831.7
(22) Date of filing: 16.11.2020
(51) Int. Cl.: G05B 13/02

(54) **METHOD AND SYSTEM FOR DETERMINING OPTIMAL OUTCOME IN A DYNAMIC ENVIRONMENT**
VERFAHREN UND SYSTEM ZUR BESTIMMUNG DES OPTIMALEN ERGEBNISSES IN EINER DYNAMISCHEN UMGEBUNG
PROCÉDÉ ET SYSTÈME PERMETTANT DE DÉTERMINER UN RÉSULTAT OPTIMAL DANS UN ENVIRONNEMENT DYNAMIQUE

(43) Date of publication of application: 25.05.2022
(73) Proprietor: Siemens Aktiengesellschaft, 80333 München (DE)
(72) Inventor: CHENNAMSETTY, Sai Saketh, 560100 Bangalore, Karnataka (IN); RAVEENDRAN, Varsha, 560062 Bangalore, Karnataka (IN); SUDHAKARAN, Vinay, 560076 Bangalore, Karnataka (IN); CHATTI, Bhanu venkata sai phani, 522601 Narasaraopeta, Andra pradesh (IN); KORI, Avinash, 580034 Hubli, Karnataka (IN)
(74) Representative: HKW Intellectual Property PartG mbB

(56) References cited:
- US-A1- 2018 012 137
- US-A1- 2019 384 273
- US-B1- 10 792 810

## Description

The present invention generally relates to adaptive control systems and more specifically to a method and system for determining an optimal artificial intelligence model to provide an optimal outcome in a dynamic environment.

Digitalization and automation in various areas has led to generation of automated control systems based on certain actions and observations from an environment. Heavy industrial environments, manufacturing environments, supply chain management systems, robotic and automation systems, autonomous vehicles, dynamic environments such as traffic environments and other environments such as highly complex machines, devices and systems and highly complex workflows, in which operators must account for a host of parameters, metrics, and the like in order to optimize design, development, deployment, and operation of different technologies in order to improve overall results are automated using various algorithms, systems and devices.

In general, most existing systems and methods provide concrete functions, which have a defined response to a defined stimulus. Such systems, while embodying the "wisdom" of the designer, have a particular shortcoming in that their capabilities, user interface and functionality are static. Moreover, in supervised and unsupervised learning systems data is collected from an environment using dedicated data collectors and sensors. The datasets are then used to train a model to function in a desired manner. However, there are several problems associated with such systems and methods. The present methods and systems may utilize machine learning algorithms that are handcrafted and have access to a limited dataset. Therefore several possibilities or instances might be missed out during training a model or designing an automation system to perform in a desired manner.

Furthermore, the conventional solutions based on the handcrafted machine learning model are completely decoupled from this higher level of understanding, capable only of blindly executing the solution. The manual customization of the parameterized search sequence, rigidity in the order of applying classifiers, and/or manual pre-determination of specific dependent parameters distributions in the conventional machine learning techniques are difficult to scale to a large number of objects or applications.

In view of the above, the present systems and methods utilizing such machine learning algorithms are rigid, non-scalable, difficult and time consuming to implement in different environments that are constantly changing and have unpredictable action spaces. Furthermore, the main disadvantages of these systems are their centralized or hierarchical control, which limits the amount of data that can be processed in real-time, in turn limiting the accuracy of adaptation, as well as reliance on expertise to install and maintain such systems. These systems also require significant manual pre-configuration (for example in case of traffic signal adaption configuration like selecting the traffic phases to be deployed, grouping junctions into subsystems etc.) as well as significant expertise and cost to configure and operate.

US 10,792,810 B1 discloses a machine learning system that builds and uses computer models for controlling robotic performance of a task. A control policy, which may be an artificial neural network, is trained using neuro-evolution. A machine learning classifier trained to programmatically evaluate the level of task success may be trained using supervised training or using unsupervised clustering-based methods.

Therefore, in light of the above there is a need for a method and system for determining an optimal outcome in a dynamic environment.

The object of the invention is to provide a method and a system that is capable of determining an optimal outcome in a dynamic environment using reinforcement learning techniques by enhancing exploration of observation space of the environment, thereby improving accuracy of the controllers and enhancing scalability of controllers.

The invention is defined by the independent claims.

In the following description, the solution according to the invention is described with respect to the claimed system as well as with respect to the claimed method. Features, advantages, or alternative embodiments herein can be assigned to the other claimed objects and vice versa. In other words, claims for the system can be improved with features described or claimed in the context of the method. In this case, the functional features of the method are embodied by objective units of the system.

The object of the invention is to provide a method of determining an optimal outcome in a dynamic environment. The method comprises generating, by a processing unit, a plurality of simulation instances of a controller. The term "simulation instances" refer to replicas of the artificial intelligence model in such a manner that each of the instance of the artificial intelligence model is capable of performing an action of the controller for which the controller is to be deployed for. Each of the plurality of simulation instances comprises an artificial intelligence model capable of performing at least one function of the controller. The method comprises computing a set of weights for respective artificial intelligence models corresponding to each of the plurality of simulation instances. The method comprises configuring each of the artificial intelligence models with the respective set of weights. The method comprises simulating a behavior of each of the configured artificial intelligence models in the simulation instances of the controller in a simulation environment. The method comprises analyzing results of simulation of the behavior of each configured artificial intelligence models. The method comprises determining an optimal artificial intelligence model from the configured artificial intelligence models corresponding to the plurality of simulation instances based on the analyzed results of simulation.

The method further comprises deploying the optimal artificial intelligence model in one or more controllers in real-time.

The method of analyzing the results of simulation of the behavior of each artificial intelligence model comprises configuring a set of behavior analysis units for analyzing the results of simulation of the behavior of each artificial intelligence model using neuro-evolution model. The method comprises analyzing the results of simulation of the behavior of respective artificial intelligence model using the configured set of behavior analysis units. The method comprises determining whether the behavior of respective artificial intelligence model is according to an expected behavior.

The method of determining an optimal artificial intelligence model from the configured artificial intelligence models comprises determining whether the behavior of configured artificial intelligence models is according to an expected behavior. The method comprises determining a fitness score of the respective behavior analysis units if the analyzed behavior of configured artificial intelligence models exceeds the expected behavior. The method comprises determining the behavior analysis unit with a highest fitness score. The method comprises determining the optimal artificial intelligence model corresponding to the behavior analysis unit with the highest fitness score.

The method further comprises determining a difference between the analyzed behavior and the expected behavior if the analyzed behavior of the respective artificial intelligence model is not according to the expected behavior. The method comprises computing a new set of weights corresponding to each of artificial intelligence models based on the determined difference. The method comprises configuring each of the artificial intelligence models with respective new set of weights. The method comprises simulating a behavior of each of the configured artificial intelligence models in the simulation environment. The method comprises repeating the steps of determining, computing, configuring, and simulating till the analyzed behavior of the artificial intelligence model meets the expected behavior.

The method comprises repeating the steps of determining, computing, configuring, and simulating further comprises iteratively generating the plurality of simulation instances of a controller based on a number of behavior analysis units configured using neuro-evolution model at each iteration.

The method further comprises determining one or more parameters from a dynamic environment in real-time. The method comprises determining an outcome of the controller based on the optimal artificial intelligence model and the determined one or more parameters such that the determined outcome meets an expected outcome in the dynamic environment.

The invention relates in one aspect to a controller for determining optimal outcome in a dynamic environment. The controller comprises at least one processing unit and a memory communicatively coupled to the at least one processing unit. The memory comprising an optimal weight determination module configured to perform the aforementioned method steps
The invention relates in another aspect to a system for determining optimal outcome in a dynamic environment. The system comprising one or more controllers, at least one processing unit communicatively coupled to the one or more controllers, and a memory communicatively coupled to the at least one processing unit. The memory comprising an optimal weight determination module configured to perform the aforementioned method steps.

The invention relates in another aspect to a cloud computing system determining optimal outcome in a dynamic environment. The cloud computing system comprises one or more controllers and a server communicatively coupled to the one or more controllers via a communication network. The server comprises an optimal weight determination module configured to perform the aforementioned method steps.

The system further comprising a plurality of sensing devices communicatively coupled to the server via the communication network. Herein, the sensing devices are configured to determine one or more parameters from the dynamic environment.

The invention relates in another aspect to a computer-program product, having computer-readable instructions stored therein, that when executed by at least one processing unit, cause the at least one processing unit to perform the aforementioned method steps.

The object of the present invention is achieved by a computer-readable medium, on which program code sections of a computer program are saved, the program code sections being loadable into and/or executable in a system to make the system execute the method described above when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
- FIG 1: is a schematic representation of an architectural overview of a system for determining optimal outcome in a dynamic environment, in accordance with an embodiment of the present invention;
- FIG 2: illustrates a block diagram of a cloud computing system for determining an optimal outcome in a dynamic environment, in accordance with an embodiment of the present invention;
- FIG 3: illustrates a block diagram of a cloud platform for implementing one or more embodiments of the present invention, in accordance with an embodiment of the present invention;
- FIG 4: illustrates a flowchart depicting steps of a method determining optimal outcome in a dynamic environment, in accordance with an embodiment of the present invention;
- FIG 5: illustrates a flowchart depicting steps of a method of analyzing the results of simulation of the behavior of each artificial intelligence model comprises, in accordance with an embodiment of the present invention;
- FIG 6: illustrates a flowchart depicting steps of a method of determining an optimal artificial intelligence model from the configured artificial intelligence models, in accordance with an embodiment of the present invention; and
- FIG 7: illustrates a flowchart depicting steps of a method of iteratively determining an optimal artificial intelligence model, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

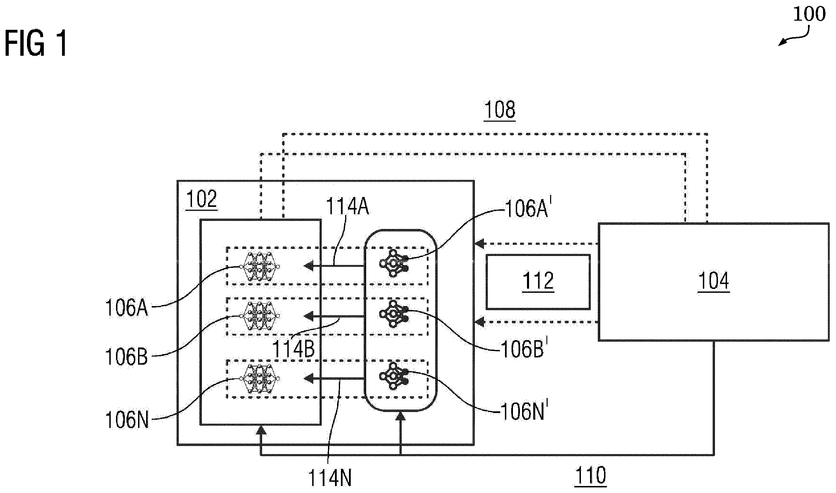

FIG 1 is a schematic representation of an architectural overview of a reinforcement learning system 100 for determining optimal outcome in a dynamic environment, in accordance with an embodiment of the present invention. The reinforcement learning system 100 comprises a server 102 capable of intelligently learning and generating a desired outcome based on feedback from actions performed in a simulation environment 104. The reinforcement learning system 100 is configured to generate a plurality of simulation instances of a controller 106. Each the plurality of simulation instances comprises an artificial intelligence model 106A-N that is capable of generating an optimal outcome using reinforcement algorithms in conjunction with neuro-evolution algorithms. The reinforcement learning system 100 may be deployed in a dynamic environment. The dynamic environment refers to environments wherein action space and observation space are highly dynamic and change from time to time. In an example, the system 100 may be employed in heavy industrial environments, manufacturing environments, supply chain management systems, robots and automation systems, autonomous vehicles, gaming environments and other dynamic environments such as traffic environments. It will be appreciated that the teachings of the invention are not limited to aforementioned environments and may be implemented in any dynamic environments having variable inputs and outputs.

According to an embodiment, the server 102 is a reinforcement learning agent in communication with controller 106 that generates output control signals 108 for an environment 104 leading to a change of state in the environment 104 based on the output control signal 108. Furthermore, the reinforcement learning agent 102 selects an optimal artificial intelligence model from the plurality of instances of the artificial intelligence models 106A-N of the controller 106. The reinforcement learning agent 102 interacts with the environment 104 and determines actions of each of the instances of the artificial intelligence models 106A-N interacting with the environment 104. In order to interact with the environment, the reinforcement learning agent 102 receives data characterizing a current state of the environment and selects an action to be performed by the controller 106 from a set of actions in response to the received data. Once the action has been selected by the reinforcement learning agent 102, the agent performs the action to interact with the environment 104.

Generally, the agent 102 interacts with the environment 104 in order to complete one or more objectives and the reinforcement learning system 100 selects actions in order to maximize the objectives of the controller 106 for which it is designed. The simulation environment 104 analyzes a behavior of each of the instances of the artificial intelligence models 106A-N and outputs the results of the simulation as fitness score 112A-N for each of the instances of the artificial intelligence models 106A-N. The fitness scores 112A-N are fed to respective behavior analysis units 106A'-N' that are configured to generate rewards 114A-N for respective instances of artificial intelligence models 106A-N. The term "rewards" 114A-N as used herein refers to numerical values that are provided as feedback inputs to the artificial intelligence model 106A-N as metric of performance of the artificial intelligence models 106A-N. The reward 114A-N can be positive or negative depending on the performance of the artificial intelligence model 106A-N. The behavior analysis units 106A'-N' are capable of generating rewards 114A-N depending on the corresponding fitness values 112A-N as outputted by the simulation environment 104. It will be appreciated that the system 100 is capable of intelligently determining rewards 114A-N over multiple iterations till the objective of the controller 106 is reached using a neuro-evolution technique which is discussed later in the description.

Notably, the output control signal 108 leads to a change of state in the simulation environment 104. The next state as achieved by the simulation environment is fed as an input control signal 110 to the controller 106. The next state refers to parameters of the simulation environment 104 after the execution of output control signals 108 as implemented in the simulation environment 104. Herein, the goal in reinforcement learning is to control an agent attempting to maximize a reward which, in the context of a controller, denotes a task that may be defined by a user as to what the controller should try to accomplish. Reinforcement learning agent 102 finds the optimal policy or the optimal artificial intelligence model which maximizes the expected sum of rewards from an initial state distribution over a period of time. The reward is based on the reward which is dependent on the task to be accomplished. Accordingly, reinforcement learning seeks to learn an optimal policy for performance of a given task.

Herein, the actions of the artificial intelligence model 106A-N are implemented on a simulation environment 104. Notably, the simulation environment 104 is capable of simulating one or more actions from a real-world environment and the reinforcement learning agent is configured to explore all possible actions in the simulated environment in order to train the controller to generate an optimal outcome in a real-world environment. In an example, the simulation environment 104 is a traffic signal controller for controlling traffic signals in a geographical location. Herein, the output control signal 108 is green time signal at an intersection of roads in a geographical location and the objective of the controller is to choose an optimal artificial intelligence model in order to maximize the green signal time in the geographical location. In another example, the simulation environment 104 is an autonomous vehicle navigating through an environment. Herein, the output signal is to generate output control signals 108 for the autonomous vehicles and the objective of the reinforcement learning agent 102 is to reach a destination, ensure the safety of any occupants of the vehicle, minimizing energy used in reaching the destination, maximizing the comfort of the occupants, and so on. In another example, the simulation environment 104 is to control one or more operations in an industrial set-up. Herein, the output control signal 108 is to generate control signals for controlling one or more operations of industrial devices in the industrial set-up and the objective of the reinforcement learning is to optimize process in the industrial set-up, determine a sequence of actions to be taken in the industrial set-up, preventing one or more anomalies in the industrial set-up and so forth.

In an exemplary implementation, the server 102 is configured to generate a plurality of simulation instances of a controller. Herein, each of the plurality of simulation instances comprises an artificial intelligence model capable of performing at least one function of the controller. Further, the server 102 is configured to compute a set of weights for respective artificial intelligence models corresponding to each of the plurality of simulation instances. The server 102 is configured to configure each of the artificial intelligence models with the respective set of weights. The server 102 is configured to simulate a behavior of each of the configured artificial intelligence models in the simulation instances of the controller in a simulation environment. The server 102 is configured to analyze results of simulation of the behavior of each configured artificial intelligence models. The server 102 is configured to determine an optimal artificial intelligence model from the configured artificial intelligence models corresponding to the plurality of simulation instances based on the analyzed results of simulation.

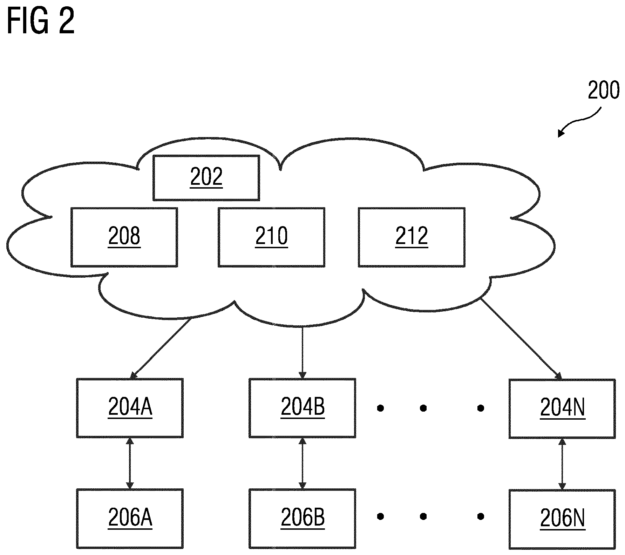

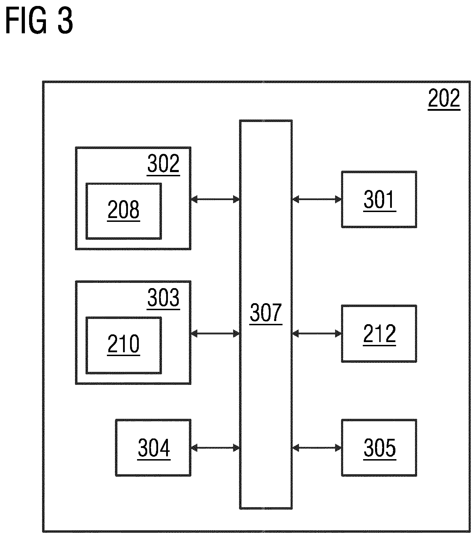

FIG 2 illustrates a block diagram of a cloud computing system 200 for determining an optimal outcome in a dynamic environment, in accordance with an embodiment of the present invention. The cloud computing system 200 comprises a cloud platform 202 in communication with one or more controllers 204A-N via a communication network. Each of the controllers 204A-N comprise an artificial intelligence model for performing the at least one action of respective controllers 204A-N. Each of the controllers 204A-N is configured for communicating with the cloud platform 202 via the communication network. The controllers 204A-N may have an operating system and at least one software program for performing desired operations. In particular, the controllers 204A-N comprise an artificial intelligence model for performing at least one action of the respective controllers 204A-N. Each of the controllers 204A-N are communicatively coupled to respective simulation environments 206A-N. In an example, the simulation environments 206A-N may be from different areas of application and are capable of generating simulation results for respective controllers 204A-N. Notably, the cloud platform 202 may be remotely located from the controllers 204A-N and respective simulation environments 206A-N. Herein, the cloud platform 202 is configured to remotely train the controllers 204A-N and determine optimal artificial intelligence models for corresponding controllers 204A-N. The cloud platform 202 can be a cloud infrastructure capable of providing cloud-based services such as data storage services, data analytics services, data visualization services, etc. based on the plant data. The cloud platform 202 can be part of public cloud or a private cloud. The cloud platform 202 may enable data scientists/software vendors to provide software applications/firmware as a service, thereby eliminating a need for software maintenance, upgrading, and backup by the users. The software application can be full application, or software patch. The cloud platform 202 is further illustrated in greater detail in FIG 3.

Pursuant to present embodiments, the cloud platform 202 comprises an optimal weight determination module 208, a database 210 and a network interface 212. The optimal weight determination module 208 is configured to generate a plurality of simulation instances of each of the one or mor controllers 204A-N. Herein, each of the plurality of simulation instances comprises an artificial intelligence model capable of performing at least one function of the controllers 206A-N. Further, the optimal weight determination module 208 is configured to compute a set of weights for respective artificial intelligence models corresponding to each of the plurality of simulation instances. The optimal weight determination module 208 is configured to configure each of the artificial intelligence models with the respective set of weights. The optimal weight determination module 208 is configured to simulate a behavior of each of the configured artificial intelligence models in the simulation instances of the controller 206A-N in a simulation environment 104. The optimal weight determination module 208 is configured to analyze results of simulation of the behavior of each configured artificial intelligence models. The optimal weight determination module 208 is configured to determine an optimal artificial intelligence model from the configured artificial intelligence models corresponding to the plurality of simulation instances based on the analyzed results of simulation.

FIG. 3 illustrates a block diagram of the cloud platform 202 for implementing one or more embodiments of the present invention. The cloud platform 202 comprises a processing unit 301, a memory 302, a storage unit 303, a network interface 212, a standard interface or bus 307. The cloud platform 202 may be an exemplary embodiment of a system. The system 202 can be a (personal) computer, a workstation, a virtual machine running on host hardware, a microcontroller, or an integrated circuit. As an alternative, the system 202 can be a real or a virtual group of computers (the technical term for a real group of computers is "cluster", the technical term for a virtual group of computers is "cloud").

The processing unit 301, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 301 may also include embedded controllers, such as generic or programmable logic devices or arrays, application specific integrated circuits, single-chip computers, and the like. In general, a processing unit 301 can comprise hardware elements and software elements. The processing unit 301 can be configured for multithreading, i.e. the processing unit 301 can host different calculation processes at the same time, executing the either in parallel or switching between active and passive calculation processes.

The memory 302 may be volatile memory and non-volatile memory. The memory 302 may be coupled for communication with the processing unit 301. The processing unit 301 may execute instructions and/or code stored in the memory 302. A variety of computer-readable storage media may be stored in and accessed from the memory 302. The memory 302 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 302 includes an optimal weight determination module 208 stored in the form of machine-readable instructions on any of the above-mentioned storage media and may be in communication to and executed by processing unit 301. When executed by the processing unit 301, the optimal weight determination module 208 causes the processing unit 301 to determine an optimal output in a dynamic environment. The optimal weight determination module 208 may further cause the processing unit 301 to automatically generate rewards for the artificial intelligence model using neuro-evolution technique. Method steps executed by the processing unit 201 to achieve the abovementioned functionality are elaborated upon in detail later in the description.

The storage unit 303 may be a non-transitory storage medium which stores a database 210. The database 210 may store output signals of the controller 106, a current state and previous state of the simulation environment 104, and so forth. The cloud platform 202 may further comprise an input unit 304 and an output unit 305. The input unit 304 may include input devices such as keypad, touch-sensitive display, camera (such as a camera receiving gesture-based inputs), etc. capable of receiving input signals such as inputs for initialization of artificial intelligence models in some cases, inputs for objectives of the controller 106, inputting threshold values for the artificial intelligence model and the like. The output unit 305 may be a device with a graphical user interface displaying results of simulation and progress of training of the controller 106 and the like. The bus 307 acts as interconnect between the processing unit 301, the memory 302, the storage unit 303, the input unit 304, and the output unit 305.

Those of ordinary skill in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

Disclosed embodiments provide systems and methods determining optimal artificial intelligence model in a dynamic environment. In particular, the systems and methods may train a controller 106 to achieve optimal outcome using reinforcement learning and generating award functions using neuro-evolution techniques.

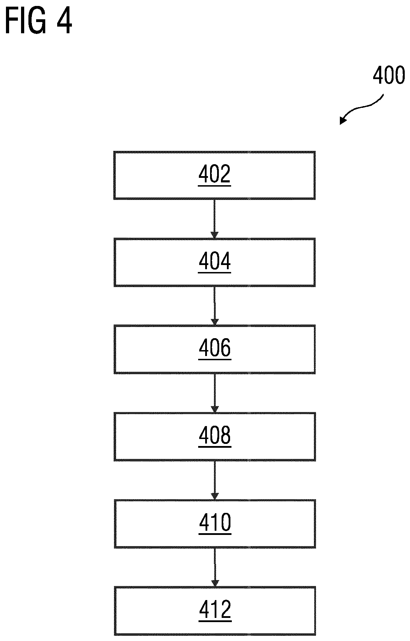

FIG 4 illustrates a flowchart 400 depicting steps of a method for determining optimal outcome in a dynamic environment, in accordance with an embodiment of the present invention. At step 402, a plurality of simulation instances of the controller 106 are generated by the processing unit 301. Herein, each of the plurality of simulation instances comprises an artificial intelligence model 106AN capable of performing at least one function of the controller 106. The term "artificial intelligence models" 106A-N as used herein refers to any algorithm that can learn a model or a pattern based on existing information or knowledge and predict or estimate output using input of new information or knowledge. The artificial intelligence model 106A-N as used herein is not trained using a training dataset as in the conventional machine learning systems. Herein, the artificial intelligence models 106A-N are subjected to a continuous learning process and subsequent adaption of weights of the artificial intelligence model 106A-N based on the actions performed by the artificial intelligence model 106A-N and a reward that is received as a consequence of the action performed. In particular, the artificial intelligence models 106A-N are trained using a reinforcement learning technique wherein a sequence of actions of maximized or minimized based on a positive reward or a negative reward respectively. Exemplary artificial intelligence models may include deep neural network, convolutional neural networks and the like. The artificial intelligence model may be capable of performing specific actions in an environment for which the model is designed to operate. In an exemplary embodiment, the artificial intelligence model 106A-N is designed to generate output traffic signals in traffic environment. The objective of the artificial intelligence model is to reduce an average delay time of vehicles at an intersection and to increase the green signal time. For this particular application, the artificial intelligence model will continuously learn a sequence of actions to be performed in the traffic environment such that the green signal time is maximized over a period of time.

Pursuant to the embodiments of the present invention, the controller 106 comprises an artificial intelligence model to perform a specific function. The artificial intelligence model is comprised of several layers such as an input layer, an output layer, and one or more hidden layers that are capable of performing a function. Each of the layers of the artificial intelligence model 106A-N is comprised of a plurality of neurons, each having a weight associated therewith. The number of layers of the artificial intelligence model and the number of neurons of the artificial intelligence model are designed to configure the artificial intelligence model to perform a specific function. The processing unit 301 is configured to generate a plurality of instances of the artificial intelligence model 106A-N. The processing unit 301 is configured to generate a number of replicas of the artificial intelligence model 106A-N in such a manner that each of the instance of the artificial intelligence model 106A-N is capable of performing an action of the controller 106 for which the controller 106 is to be deployed for. In an example, if the controller 106 is configured to control lighting in an environment based on an input, then each of the instances of the controller 106 is configured to control lighting in an environment based on the input. However, the efficiency of each of the instance of the controller or the sequence of the actions that are to be performed for adaptive lighting control may vary for each of the instance, or may be same of two or more instances depending on an initial set of weights of each of the plurality of instances.

At step 404, a set of weights are computed for respective artificial intelligence models 106A-N corresponding to each of the plurality of simulation instances. The weights in an artificial intelligence model define a probability of certain action to be carried out in an environment. An initial set of weights is allotted to each of the neurons in each of the plurality of instance of the controller 106. In an example, at an initial state of the controller 106, the set of weights are randomly generated for each of the plurality of instances of the controller 106. As each of the plurality of instances are initialized with different set of random weights, the output signal generated from each of the plurality of instances is different. At step 406, each of the artificial intelligence models is configured with the respective set of weights. Subsequent to generation of set of weights, each of the artificial intelligence models 106A-N are configured in accordance with the randomly generated set of weights. Herein, configuring the artificial intelligence model 106A-N refers to assigning weights to each of the neurons in the artificial intelligence model 106A-N.

At step 408, a behavior of each of the configured artificial intelligence models 106A-N in the plurality of instances of the controller is simulated in a simulation environment 104. In an embodiment, a digital twin or a virtual model of various devices and/or elements in the environment 104 is simulated. The virtual model or the simulation model of an environment is capable of simulating one or more functions and/or operations of the one or more elements or participants in the simulation environment 104. The simulation environment 104 may have access to all data associated with an environment in which the controller 106 is to be deployed. The replication of a real environment to a simulation environment 104 is based on data associated with the environment. In an example, the simulation environment 104 may be designed movement of autonomous vehicle on rods. Herein, the data for generating a simulation environment may include an information of roads and maps of the area of operation of the autonomous vehicles, a visual and/or sensory data of other vehicles or objects on the roads, operating parameters of the autonomous vehicles such as speed, direction, acceleration, location of the autonomous vehicle and so forth. In another example, the simulation environment 104 may be designed for managing products in a supply chain management. Herein, the data for generating the simulation environment 104 may include information of all the products in different warehouses and in-transit, a condition of each of the products, location and estimated time of each products, and so forth. It will be appreciated that the simulation environment 104 is designed to mimic operations and challenges of real world environment such that the artificial intelligence model learns from the observations in the simulation environment 104 which are subsequently applied in the real-world environment. Furthermore, output signals as generated from each of the instances of the artificial intelligence models are simulated in the simulation environment 104. Each of the elements in the simulation environment 104 will behave in a particular manner when the generated output signal is simulated in the simulation environment 104. The behavioral changes in the simulation environment 104 lead to a change of state in the simulation environment 104. Notably, the simulation environment may react different to each of the instances of the artificial intelligence models 106A-N. In an example, for traffic simulation environment 104, the traffic density at a particular junction may increase for a first instance of the artificial intelligence model, and the traffic density at the particular junction may decrease for a second instance of the artificial intelligence model.

At step 410, results of simulation of the behavior of each configured artificial intelligence models 106A-N are analyzed. As mentioned above, the state of the simulation environment 104 may change for each of the instances of the artificial intelligence models 106A-N, the observation state of the simulation environment 104 for each of the plurality of instances are analyzed. Notably, the results of the behavior of each of the configured artificial intelligence models 106A-N are observed as change of state in the simulation environment 104. In an example, for traffic simulation environment, the analysis of results of simulation is based on the average delay time at the intersection of roads. The results of the analysis determine how well each of the plurality of instances of artificial intelligence models 106A-N has performed in achieving the objective of the controller 104. According to an embodiment, in case of reinforcement learning models, the analysis of the results of simulation of each of the artificial models 106A-N includes automatically generating rewards for each of the instances using behavioral analysis units that is explained in greater detail later in the description.

At step 412, an optimal artificial intelligence model is determined from the configured artificial intelligence models 106A-N corresponding to the plurality of simulation instances based on the analyzed results of simulation. The results of the analysis of each of the plurality of instances determine how well a particular instance has performed to achieve a certain objective of the controller 106. Based on the results of simulation, highest performing instance of the configured artificial intelligence model is selected to be the optimal artificial intelligence model. In particular, the behavior analysis units 106A'-N' are configured to analyze the performance of each of the plurality of instances over multiple iterations and then determine the optimal artificial intelligence model that is explained in greater detail later in the description. In an example, for traffic simulation environments, the optimal artificial intelligence model is selected such that the average green signal time at the intersection is highest, thereby achieving the objective of the traffic signal controller.

In overview, the plurality of instances of the artificial intelligence model 106A-N are generated and simulation in a simulation environment 104. The behavior analysis units 106A'-N' are configured to analyze the performance and actions of the corresponding instances of the artificial intelligence model 106A-N based on the results of the simulation. The behavior analysis units 106A'-N' are populated to generate new behavior analysis units over multiple iterations, and corresponding instances of the artificial intelligence model 106A-N are generated over multiple iterations. Each of the artificial intelligence models 106A-N compete with one another and the highest performing artificial intelligence model is selected when the iterations are terminated. Such a method ensures that the observation space or the simulation environment is entirely explored for any situation that might occur in the dynamic environment. Hence, the controller 106 learns from actions performed therein and is capable of handling unprecedented scenarios that might occur in the dynamic environment.

According to an embodiment, the method further comprises deploying the optimal artificial intelligence model in one or more controllers 106 in real-time. The determined optimal artificial intelligence model is configured with the optimal set of weights to generate optimal output signals for an environment. The selected optimal artificial intelligence models may be deployed in one or more controllers and deployed in real world environment. In case of traffic control environments, the optimal artificial intelligence model is capable of generating control signals that would optimize the green time signals at the intersections may be deployed in various geographical locations. The method further comprises determining one or more parameters from a dynamic environment in real-time. Herein, the one or more parameters may include state of various elements such as traffic density at the intersection, speed of vehicles, and so forth. Furthermore, the method comprises determining an outcome of the controller based on the optimal artificial intelligence model and the determined one or more parameters such that the determined outcome meets an expected outcome or behavior in the dynamic environment. The expected outcome or behavior may the green signal time that needs to be maximized at the intersection. In an example, when the optimal artificial intelligence model is deployed in real-time, the outcome of the controller 106 is continuously compared with expected outcome or behavior of the controller 106 to effectively monitor the operations of the controller 106.

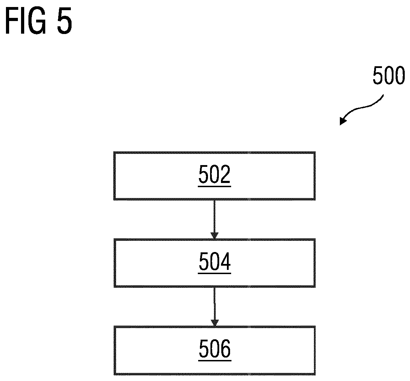

FIG 5 illustrates a flowchart 500 depicting steps of a method of analyzing the results of simulation of the behavior of each artificial intelligence model, in accordance with an embodiment of the present invention. At step 502, the set of behavior analysis units 106A'-N' are configured for analyzing the results of simulation of the behavior of each artificial intelligence model 106A-N using neuro-evolution model. The term "neuro-evolution model" as used herein refers to artificial intelligence algorithms that use genetic evolution techniques to select a fittest model from a plurality of models performing an action in a given environment. The neuro-evolution models assess a performance of the artificial intelligence model over several iterations or populations and evolve to determine a highest performing model. In general, the neuro-evolution models or genetic algorithms imitate the evolutionary process in genes. From a given population with certain characteristics, the fittest have the highest probability in being transferred to the next generation. In order to explore further favorable characteristics, certain genes are slightly changed. As a starting point, a randomly generated population of behavior analysis units 106A'-N' that will generate rewards 114A-N for the performance of the artificial intelligence models, representing genes, are generated. These behavior analysis units 106A'-N' represent potential solutions to a problem. The degree to which a corresponding artificial intelligence model 106A-N is closer to the expected behavior, is represented by a fitness score. The expected behavior is the optimal outcome of controller 106 for which the artificial intelligence model 106A-N is designed for. The expected behavior is achieved when the objective of the controller 106 is attained. For example, the expected behavior for a traffic controller is minimum average delay time at the intersection. The higher the fitness score of the behavior analysis unit 106A'-N', the fitter is the corresponding artificial intelligence model for evolving in subsequent populations of the artificial intelligence models. In order to evolve to a new generation of behavior analysis units 106A'-N' and corresponding instance of the artificial intelligence model 106A-N, the neuro-evolution models apply operators such as selection, speciation, cross-over and mutation. When using the selection operator, the likelihood of selecting the fittest model is highest in subsequent populations. When using the speciation operator, the behavior analysis units 106A'-N' are divided into species based on their topological similarity. This operator improves the diversity of the behavior of the artificial intelligence models 106A-N. When using the cross-over operator, topologies of two or more behavior analysis units 106A'-N' are combined together in subsequent populations. When using the mutation operator, the neurons in one or more behavior analysis units 106A'-N' may be eliminated or flipped to generate new species in the next population. It will be appreciated that the term "population" may be interchangeably used with the term iteration in this context, as for each new iteration, a new population is generated. The algorithm evolves a new generation by applying the selection, cross-over and mutation operators and replacing some/all of the strings in the previous generation with the newly created strings. The number of iterations of this process equals the number of generations. This imitates the genetic process of inheritance. For each iteration or population, the behavior analysis units 106A'-N' are populated that analyze the behavior of each of the artificial intelligence models 106A-N by generating rewards 114A-N. The rewards 114A-N are numeric values that are a metric to define how well the corresponding artificial intelligence models 106A-N are performing to achieve an objective of the controller 106. Each of the behavior analysis units 106A'-N' is configured to generate the rewards 114A-N indicating the performance of the corresponding artificial intelligence models 106A-N. Notably, the configuration of the set of behavior analysis units 106A'-N' is done using operators of the neuro-evolution model for each iteration. It will be appreciated that each of the behavior analysis units 106A'-N' is associated with an instance of the artificial intelligence model and is configured to generate rewards 114A-N for the corresponding instance of the artificial intelligence model. Therefore, for each iteration corresponding instances of artificial intelligence models 106A-N are generated corresponding to each behavior analysis units 106A'-N'.

At step 504, the results of simulation of the behavior of respective artificial intelligence model 106A-N are analyzed using the configured set of behavior analysis units 106A'-N'. The behavior analysis units 106A'-N' receive the results of the simulation of the configured artificial intelligence models 106A-N and evaluate then to output rewards 114A-N for the artificial intelligence models 106A-N. At step 506, it is determined whether the behavior of respective artificial intelligence model 106A-N is according to an expected behavior. The expected behavior is the objective of the controller 106. The behavior analysis units 106A'-N' determine whether the artificial intelligence model is performing towards achieving the expected behavior or not, and then generate reward 114A-N based on the analysis. In an example, for traffic simulation environments, if the results of the simulation of action performed by an instance of the artificial intelligence model 106A-N are positive, then the behavior analysis units 106A'-N' will generate positive rewards 114A-N or higher rewards for the corresponding instance of the artificial intelligence models 106A-N. A positive action will lead to positive reward for the instance of the artificial intelligence model. Herein, positive rewards 114A-N are generated when the difference between the result of the simulation and the expected behavior is decreasing. Furthermore, if the results of the simulation of action performed by an instance of the artificial intelligence model 106A-N are negative, then the behavior analysis units 106A'-N' will generate negative rewards or lower rewards for the corresponding instance of the artificial intelligence models 106A-N. It will be appreciated that behavior analysis units 106A'-N' that generate positive rewards 114A-N over a series of iterations are favored and corresponding artificial intelligence models 106A-N are evolved to be included in subsequent iterations. However, the behavior analysis units 106A'-N' that generate negative rewards 114A-N over a series of iterations are not favored and corresponding artificial intelligence 106AN models are eliminated in subsequent iterations.

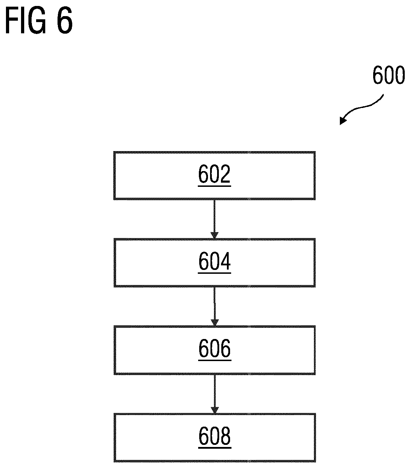

FIG 6 illustrates a flowchart 600 depicting steps of a method of determining an optimal artificial intelligence model from the configured artificial intelligence models, in accordance with an embodiment of the present invention. At step 602, it is determined whether the behavior of configured artificial intelligence models 106A-N is according to the expected behavior. For a particular iteration, it is determined whether one or more of the instances of the artificial intelligence models 106A-N are in accordance with the expected behavior. The results of simulation of each of the artificial intelligence models 106A-N in an iteration are compared with the expected behavior. If the results from simulation of at least one artificial intelligence model 106A-N meets the expected behavior, then any subsequent iterations are terminated. At step 604, a fitness score of the respective behavior analysis units 106A'-N' is determined if the analyzed behavior of configured artificial intelligence models exceeds the expected behavior. The fitness score 112A-N is calculated based on the results of the simulation of actions performed by the artificial intelligence models 106A-N in the simulation environment 104. Notably, better the results of the simulation, higher is the value of fitness score of the corresponding instance of the artificial intelligence model 106A-N. At step 604, the behavior analysis unit 106A'-N' with a highest fitness score 112A-N is determined. The behavior analysis unit 106A'-N' with the highest fitness score 112A-N is capable of generating accurate rewards 114A-N for the corresponding artificial intelligence model. At step 606, the optimal artificial intelligence model corresponding to the behavior analysis unit with the highest fitness score is determined. When subsequent iterations are terminated, the artificial intelligence model corresponding to the behavior analysis units 106A'-N' having the highest fitness score is selected for deployment in real-time.

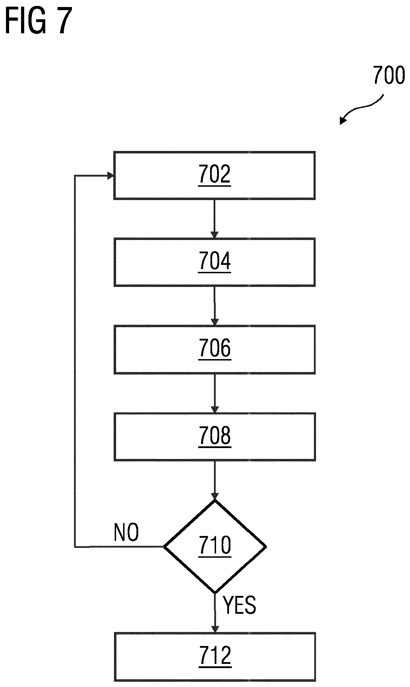

FIG 7 illustrates a flowchart 700 depicting steps of a method of iteratively determining an optimal artificial intelligence model, in accordance with an embodiment of the present invention. At step 702, a difference between the analyzed behavior and the expected behavior is calculated if the analyzed behavior of the respective artificial intelligence model is not according to the expected behavior. The results of simulations are outputted by the simulation environment for each of the instances of artificial intelligence models to determine the analyzed behavior. Further, a comparison is made between the analyzed behavior and the expected behavior of each of the instances of the artificial intelligence models 106A-N. If the analyzed behavior does not meet the expected behavior, then a difference between the expected behavior and analyzed behavior is calculated. The difference determines an offset value of diversion of the artificial intelligence from the expected behavior. At step 704, a new set of weights corresponding to each of artificial intelligence models is computed based on the determined difference. The weights of the neurons of the artificial intelligence model are adjusted to a higher value or lower value based on the diversion of the analyzed behavior from the expected behavior. At step 706, each of the artificial intelligence models are configured with respective new set of weights. At step 708, a behavior of each of the configured artificial intelligence models is simulated in the simulation environment. Notably, the simulation environment is re-initialized with new set of weights to determine the behavior of the elements in the simulation environment. At step 710, a decision is made whether the results of the behavior of the simulation with new weights meet the expected behavior or not. If the analyzed behavior does not meet with the expected behavior, step 702 is executed till the analyzed behavior of the artificial intelligence model meets the expected behavior. If the analyzed behavior meets the expected behavior, then step 712 is executed to determine the optimal artificial intelligence model. According to an embodiment, further comprises iteratively generating the plurality of simulation instances of a controller 106 based on a number of behavior analysis units 106A'-N' configured using neuro-evolution model at each iteration

An advantage of the invention is that the training of the controller is carried in a continuous learning manner, wherein the artificial intelligence model is not fed with a limited dataset that limits the capability and efficiency of the artificial intelligence algorithm. In the present invention, the controller is capable of exploring unprecedented scenarios in an environment and learn to adapt accordingly. Another advantage of the present invention is that controller 106 as trained using reinforcement learning technique is capable of performing equally efficiently in geographically different environments, thereby making the disclosed controller 106 scalable. For example, a controller 106 that is trained for generating traffic control signals in a traffic environment is capable of being deployed in any geographical location without tuning the parameters of the artificial intelligence algorithm for that particular location. Another advantage of the present invention is automatic generation of rewards for analysis of performance of the artificial intelligence model. Furthermore, the present invention generates optimal rewards and optimal outcomes of the controller 106 in an efficient manner.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein.

Those skilled in the art, having the benefit of the teachings of this specification, may effect numerous modifications thereto and changes may be made without departing from the scope of the invention in its aspects.

## Claims

1. A method comprising:
generating, by a processing unit (301), a plurality of simulation instances of a controller (106), wherein each of the plurality of simulation instances comprises an artificial intelligence model (106A-N) capable of performing at least one function of the controller (106);
computing a set of weights for respective artificial intelligence models (106A-N) corresponding to each of the plurality of simulation instances;
configuring each of the artificial intelligence models (106A-N) with the respective set of weights;
simulating a behavior of each of the configured artificial intelligence models (106A-N) in the simulation instances of the controller (106) in a simulation environment (104);
analyzing results of the simulation of the behavior of each configured artificial intelligence models (106A-N);
refining the artificial intelligence models (106A-N) using generated rewards (114A-N); and
determining an optimal artificial intelligence model from the configured artificial intelligence models (106A-N) corresponding to the plurality of simulation instances based on the analyzed results of simulation,
wherein the method steps are repeated over multiple iterations until the optimal artificial intelligence model is obtained, and the optimal artificial intelligence model is an artificial intelligence model that maximizes the rewards over a period of time,
**characterized in that**
analyzing the results of simulation of the behavior of each artificial intelligence model (106A-N) comprises:
configuring, using a neuro-evolution model, a set of behavior analysis units (106A'-N') for analyzing the results of the simulation of the behavior of each artificial intelligence model (106A-N) in each iteration;
analyzing the results of simulation of the behavior of the respective artificial intelligence model (106A-N) using the configured set of behavior analysis units (106A'-N'); and
determining whether the behavior of the respective artificial intelligence model (106A-N) is according to an expected behavior,
wherein the respective behavior analysis unit (106A'-N') generates the rewards (114A-N) for a corresponding one of the artificial intelligence models (106A-N) based on a fitness score (112A-112N) describing a result of the simulation that is output by the simulation environment (104). (104), further comprising deploying the optimal artificial intelligence model in one or more controllers (204A-N) in real-time.

2. The method according to claim, wherein determining an optimal artificial intelligence model from the configured artificial intelligence models (106A-N) comprises:
determining whether the behavior of configured artificial intelligence models (106A-N) is according to an expected behavior;
determining a fitness score (112A-N) of the respective behavior analysis units (106A'-N') if the analyzed behavior of configured artificial intelligence models exceeds the expected behavior;
determining the behavior analysis units (106A'-N') with a highest fitness score; and
determining the optimal artificial intelligence model corresponding to the behavior analysis unit (106A'-N') with the highest fitness score.

3. The method according to any of claims 1 or 2, , further comprising:
determining a difference between the analyzed behavior and the expected behavior if the analyzed behavior of the respective artificial intelligence model (106A-N) is not according to the expected behavior;
computing a new set of weights corresponding to each of artificial intelligence models (106A-N) based on the determined difference;
configuring each of the artificial intelligence models (106A-N) with respective new set of weights;
simulating a behavior of each of the configured artificial intelligence models (106A-N) in the simulation environment (104); and
repeating the steps of determining, computing, configuring, and simulating till the analyzed behavior of the artificial intelligence model (106A-N) meets the expected behavior.

4. The method according to any of claims 1 to 3, wherein repeating the steps of determining, computing, configuring, and simulating further comprises iteratively generating the plurality of simulation instances of a controller (106) based on a number of behavior analysis units (106A'-N') configured using neuro-evolution model at each iteration.

5. The method according to claim 1, further comprising:
determining one or more parameters from a dynamic environment in real-time; and
determining an outcome of the controller (106) based on the optimal artificial intelligence model and the determined one or more parameters such that the determined outcome meets an expected outcome in the dynamic environment.

6. A controller (106) for determining optimal outcome in a dynamic environment, the controller comprising:
at least one processing unit (301); and
a memory (302) communicatively coupled to the at least one processing unit (301), the memory (302) comprising an optimal weight determination module (208) configured to perform the method steps as claimed in claims 1 to 5.

7. A system (100) for determining optimal outcome in a dynamic environment, the system comprising:
one or more controllers (106);
at least one processing unit (301) communicatively coupled to the one or more controllers (106); and
a memory (302) communicatively coupled to the at least one processing unit (301), the memory (302) comprising an optimal weight determination module (208) configured to perform the method steps as claimed in claims 1 to 5.

8. A cloud computing system (200) determining optimal outcome in a dynamic environment, the cloud computing system (200) comprising:
one or more controllers (204A-N); and
a server (202) communicatively coupled to the one or more controllers via a communication network, wherein the server (202) comprises an optimal weight determination module (208) configured to perform the method steps as claimed in claims 1 to 5.

9. The system (200) according to claim 7 further comprising a plurality of sensing devices communicatively coupled to the server via the communication network, wherein the sensing devices are configured to determine one or more parameters from the dynamic environment.

10. A computer-program product, having computer-readable instructions stored therein, that when executed by at least one processing unit (301), cause the at least one processing unit (301) to perform method steps according to any of the claims 1 5.

## Patentansprüche

1. Verfahren, das Folgendes umfasst:
Erzeugen, durch eine Verarbeitungseinheit (301), einer Vielzahl von Simulationsinstanzen einer Steuerung (106), wobei jede der Vielzahl von Simulationsinstanzen ein Künstliche-Intelligenz-Modell (106A-N) umfasst, das in der Lage ist, mindestens eine Funktion der Steuerung (106) durchzuführen;
Berechnen eines Satzes von Gewichtungen für jeweilige Künstliche-Intelligenz-Modelle (106A-N), die jeder der Vielzahl von Simulationsinstanzen entsprechen;
Konfigurieren jedes der Künstliche-Intelligenz-Modelle (106A-N) mit dem jeweiligen Satz von Gewichtungen;
Simulieren eines Verhaltens jedes der konfigurierten Künstliche-Intelligenz-Modelle (106A-N) in den Simulationsinstanzen der Steuerung (106) in einer Simulationsumgebung (104);
Analysieren von Ergebnissen der Simulation des Verhaltens jedes konfigurierten Künstliche-Intelligenz-Modells (106A-N);
Verfeinern der Künstliche-Intelligenz-Modelle (106A-N) unter Verwendung generierter Belohnungen (114A-N); und
Bestimmen eines optimalen Künstliche-Intelligenz-Modells aus den konfigurierten Künstliche-Intelligenz-Modellen (106A-N), die der Vielzahl von Simulationsinstanzen entsprechen, basierend auf den analysierten Simulationsergebnissen,
wobei die Verfahrensschritte über mehrere Iterationen wiederholt werden, bis das optimale Künstliche-Intelligenz-Modell erhalten wird, und das optimale Künstliche-Intelligenz-Modell ein Künstliche-Intelligenz-Modell ist, das die Belohnungen über einen Zeitraum maximiert,
**dadurch gekennzeichnet, dass**
das Analysieren der Ergebnisse der Simulation des Verhaltens jedes Künstliche-Intelligenz-Modells (106A-N) Folgendes umfasst:
Konfigurieren, unter Verwendung eines Neuro-Evolution-Modells, eines Satzes von Verhaltensanalyseeinheiten (106A'-N') zum Analysieren der Ergebnisse der Simulation des Verhaltens jedes Künstliche-Intelligenz-Modells (106A-N) in jeder Iteration;
Analysieren der Ergebnisse einer Simulation des Verhaltens des jeweiligen Künstliche-Intelligenz-Modells (106A-N) unter Verwendung des konfigurierten Satzes von Verhaltensanalyseeinheiten (106A'-N'); und
Bestimmen, ob das Verhalten des jeweiligen Künstliche-Intelligenz-Modells (106A-N) gemäß einem erwarteten Verhalten ist,
wobei die jeweilige Verhaltensanalyseeinheit (106A'-N') die Belohnungen (114A-N) für ein entsprechendes der Künstliche-Intelligenz-Modelle (106A-N) basierend auf einer Eignungsbewertung (112A-112N) erzeugt, die ein Ergebnis der Simulation beschreibt, die durch die Simulationsumgebung (104) ausgegeben wird, ferner umfassend das Einsetzen des optimalen Künstliche-Intelligenz-Modells in einer oder mehreren Steuerungen (204A-N) in Echtzeit.

2. Verfahren nach Anspruch 1, wobei das Bestimmen eines optimalen Künstliche-Intelligenz-Modells aus den konfigurierten Künstliche-Intelligenz-Modellen (106A-N) Folgendes umfasst:
Bestimmen, ob das Verhalten von konfigurierten Künstliche-Intelligenz-Modellen (106A-N) einem erwarteten Verhalten entspricht;
Bestimmen einer Eignungsbewertung (112A-N) der jeweiligen Verhaltensanalyseeinheiten (106A'-N'), falls das analysierte Verhalten konfigurierter Künstliche-Intelligenz-Modelle das erwartete Verhalten überschreitet;
Bestimmen der Verhaltensanalyseeinheiten (106A'-N') mit einer höchsten Eignungsbewertung; und
Bestimmen des optimalen Künstliche-Intelligenz-Modells, das der Verhaltensanalyseeinheit (106A'-N') mit der höchsten Eignungsbewertung entspricht.

3. Verfahren nach einem der Ansprüche 1 oder 2, das ferner Folgendes umfasst:
Bestimmen einer Differenz zwischen dem analysierten Verhalten und dem erwarteten Verhalten, falls das analysierte Verhalten des jeweiligen Künstliche-Intelligenz-Modells (106A-N) nicht dem erwarteten Verhalten entspricht;
Berechnen eines neuen Satzes von Gewichtungen, die jedem der Künstliche-Intelligenz-Modelle (106A-N) entsprechen, basierend auf der bestimmten Differenz;
Konfigurieren jedes der Künstliche-Intelligenz-Modelle (106A-N) mit einem jeweiligen neuen Satz von Gewichtungen;
Simulieren eines Verhaltens jedes der konfigurierten Künstliche-Intelligenz-Modelle (106A-N) in der Simulationsumgebung (104); und
Wiederholen der Schritte des Bestimmens, Berechnens, Konfigurierens und Simulierens, bis das analysierte Verhalten des Künstliche-Intelligenz-Modells (106A-N) das erwartete Verhalten erfüllt.

4. Verfahren nach einem der Ansprüche 1 bis 3, wobei das Wiederholen der Schritte des Bestimmens, Berechnens, Konfigurierens und Simulierens ferner iteratives Erzeugen der Vielzahl von Simulationsinstanzen einer Steuerung (106) basierend auf einer Anzahl von Verhaltensanalyseeinheiten (106A'-N') umfasst, die unter Verwendung eines Neuro-Evolution-Modells bei jeder Iteration konfiguriert sind.

5. Verfahren nach Anspruch 1, das ferner Folgendes umfasst:
Bestimmen eines oder mehrerer Parameter aus einer dynamischen Umgebung in Echtzeit; und
Bestimmen eines Ergebnisses der Steuerung (106) basierend auf dem optimalen Künstliche-Intelligenz-Modell und dem bestimmten einen oder den bestimmten mehreren Parametern, so dass das bestimmte Ergebnis ein erwartetes Ergebnis in der dynamischen Umgebung erfüllt.

6. Steuerung (106) zum Bestimmen eines optimalen Ergebnisses in einer dynamischen Umgebung, wobei die Steuerung Folgendes umfasst:
zumindest eine Verarbeitungseinheit (301); und
einen Speicher (302), der kommunikativ mit der mindestens einen Verarbeitungseinheit (301) gekoppelt ist, wobei der Speicher (302) ein Modul (208) zur Bestimmung der optimalen Gewichtung aufweist, das dafür ausgebildet ist, die in den Ansprüchen 1 bis 5 beanspruchten Verfahrensschritte durchzuführen.

7. System (100) zum Bestimmen eines optimalen Ergebnisses in einer dynamischen Umgebung, wobei das System Folgendes umfasst:
eine oder mehrere Steuerungen (106);
mindestens eine Verarbeitungseinheit (301), die kommunikativ mit der einen oder den mehreren Steuerungen (106) gekoppelt ist; und
einen Speicher (302), der kommunikativ mit der mindestens einen Verarbeitungseinheit (301) gekoppelt ist, wobei der Speicher (302) ein Modul (208) zur Bestimmung der optimalen Gewichtung aufweist, das dafür ausgebildet ist, die in den Ansprüchen 1 bis 5 beanspruchten Verfahrensschritte durchzuführen.

8. Cloud-Rechensystem (200), das ein optimales Ergebnis in einer dynamischen Umgebung bestimmt, wobei das Cloud-Rechensystem (200) Folgendes umfasst:
eine oder mehrere Steuerungen (204A-N); und
einen Server (202), der über ein Kommunikationsnetzwerk kommunikativ mit der einen oder den mehreren Steuerungen gekoppelt ist, wobei der Server (202) ein Modul (208) zur Bestimmung der optimalen Gewichtung aufweist, das dafür ausgebildet ist, die in den Ansprüchen 1 bis 5 beanspruchten Verfahrensschritte durchzuführen.

9. System (200) nach Anspruch 7, das ferner eine Vielzahl von Erfassungsvorrichtungen umfasst, die über das Kommunikationsnetzwerk kommunikativ mit dem Server gekoppelt sind, wobei die Erfassungsvorrichtungen dazu ausgelegt sind, einen oder mehrere Parameter aus der dynamischen Umgebung zu bestimmen.

10. Computerprogrammprodukt mit darin gespeicherten computerlesbaren Anweisungen, die, wenn sie durch mindestens eine Verarbeitungseinheit (301) ausgeführt werden, die mindestens eine Verarbeitungseinheit (301) veranlassen, Verfahrensschritte nach einem der Ansprüche 1 bis 5 durchzuführen.

## Revendications

1. Procédé comprenant :
la génération, par une unité de traitement (301), d'une pluralité d'instances de simulation d'un contrôleur (106), chacune de la pluralité d'instances de simulation comprenant un modèle d'intelligence artificielle (106AN) apte à réaliser au moins une fonction du contrôleur (106) ;
le calcul d'un ensemble de poids pour des modèles d'intelligence artificielle (106A-N) respectifs correspondant à chacune de la pluralité d'instances de simulation ;
la configuration de chacun des modèles d'intelligence artificielle (106A-N) avec l'ensemble de poids respectif ;
la simulation d'un comportement de chacun des modèles d'intelligence artificielle (106A-N) configurés dans les instances de simulation du contrôleur (106) dans un environnement de simulation (104) ;
l'analyse de résultats de la simulation du comportement de chaque modèle d'intelligence artificielle (106A-N) configuré ;
l'affinage des modèles d'intelligence artificielle (106A-N) au moyen de récompenses (114A-N) générées ; et
la détermination d'un modèle d'intelligence artificielle optimal parmi les modèles d'intelligence artificielle (106A-N) configurés correspondant à la pluralité d'instances de simulation sur la base des résultats de simulation analysés,
les étapes du procédé étant répétées sur de multiples itérations jusqu'à obtention du modèle d'intelligence artificielle optimal, et le modèle d'intelligence artificielle optimal étant un modèle d'intelligence artificielle qui maximise les récompenses sur une période de temps,
**caractérisé en ce que**
l'analyse des résultats de simulation du comportement de chaque modèle d'intelligence artificielle (106A-N) comprend :
la configuration, au moyen d'un modèle de neuro-évolution, d'un ensemble d'unités d'analyse de comportement (106A'-N') destinées à analyser les résultats de la simulation du comportement de chaque modèle d'intelligence artificielle (106A-N) à chaque itération ;
l'analyse des résultats de simulation du comportement du modèle d'intelligence artificielle (106A-N) respectif au moyen de l'ensemble configuré d'unités d'analyse de comportement (106A'-N') ; et
la détermination si le comportement du modèle d'intelligence artificielle (106A-N) respectif est ou non conforme à un comportement attendu,
l'unité d'analyse de comportement (106A'-N') respective générant les récompenses (114A-N) pour un modèle correspondant parmi les modèles d'intelligence artificielle (106A-N) sur la base d'un score d'adaptation (112A-112N) décrivant un résultat de la simulation qui est produit par l'environnement de simulation (104), comprenant en outre le déploiement, en temps réel, du modèle d'intelligence artificielle optimal dans un ou plusieurs contrôleurs (204AN).

2. Procédé selon la revendication 1, dans lequel la détermination d'un modèle d'intelligence artificielle optimal parmi les modèles d'intelligence artificielle (106A-N) configurés comprend :
la détermination si le comportement de modèles d'intelligence artificielle (106A-N) configurés est ou non conforme à un comportement attendu ;
la détermination d'un score d'adaptation (112A-N) des unités d'analyse de comportement (106A'-N') respectives si le comportement analysé de modèles d'intelligence artificielle configurés dépasse le comportement attendu ;
la détermination de l'unité d'analyse de comportement (106A'-N') présentant le score d'adaptation le plus élevé ; et
la détermination du modèle d'intelligence artificielle optimal correspondant à l'unité d'analyse de comportement (106A'-N') présentant le score d'adaptation le plus élevé.

3. Procédé selon l'une quelconque des revendications 1 ou 2, comprenant en outre :
la détermination d'une différence entre le comportement analysé et le comportement attendu si le comportement analysé du modèle d'intelligence artificielle (106A-N) respectif n'est pas conforme au comportement attendu ;
le calcul d'un nouvel ensemble de poids correspondant à chacun des modèles d'intelligence artificielle (106A-N) sur la base de la différence déterminée ;
la configuration de chacun des modèles d'intelligence artificielle (106A-N) avec le nouvel ensemble de poids respectif ;
la simulation d'un comportement de chacun des modèles d'intelligence artificielle (106A-N) configurés dans l'environnement de simulation (104) ; et
la répétition des étapes de détermination, de calcul, de configuration, et de simulation jusqu'à ce que le comportement analysé du modèle d'intelligence artificielle (106A-N) corresponde au comportement attendu.

4. Procédé selon l'une quelconque des revendications 1 à 3, dans lequel la répétition des étapes de détermination, de calcul, de configuration, et de simulation comprend en outre la génération itérative de la pluralité d'instances de simulation d'un contrôleur (106) sur la base d'un nombre d'unités d'analyse de comportement (106A'-N') configurées au moyen d'un modèle de neuro-évolution à chaque itération.

5. Procédé selon la revendication 1, comprenant en outre :
la détermination, en temps réel, d'un ou de plusieurs paramètres à partir d'un environnement dynamique ; et
la détermination d'un effet résultant du contrôleur (106) sur la base du modèle d'intelligence artificielle optimal et du ou des paramètres déterminés, de sorte que l'effet résultant déterminé corresponde à un effet résultant attendu dans l'environnement dynamique.

6. Contrôleur (106) destiné à déterminer un effet résultant optimal dans un environnement dynamique, le contrôleur comprenant :
au moins une unité de traitement (301) ; et
une mémoire (302) couplée en communication avec l'au moins une unité de traitement (301), la mémoire (302) comprenant un module de détermination de poids optimaux (208) configuré pour réaliser les étapes du procédé selon les revendications 1 à 5.

7. Système (100) destiné à déterminer un effet résultant optimal dans un environnement dynamique, le système comprenant :
un ou plusieurs contrôleurs (106) ;
au moins une unité de traitement (301) couplée en communication avec le ou les contrôleurs (106) ; et
une mémoire (302) couplée en communication avec l'au moins une unité de traitement (301), la mémoire (302) comprenant un module de détermination de poids optimaux (208) configuré pour réaliser les étapes du procédé selon les revendications 1 à 5.

8. Système de cloud computing (200) déterminant un effet résultant optimal dans un environnement dynamique, le système de cloud computing (200) comprenant :
un ou plusieurs contrôleurs (204A-N) ; et
un serveur (202) couplé en communication avec le ou les contrôleurs via un réseau de communication, le serveur (202) comprenant un module de détermination de poids optimaux (208) configuré pour réaliser les étapes du procédé selon les revendications 1 à 5.

9. Système (200) selon la revendication 7, comprenant en outre une pluralité de dispositifs de détection couplés en communication avec le serveur via le réseau de communication, les dispositifs de détection étant configurés pour déterminer un ou plusieurs paramètres à partir de l'environnement dynamique.

10. Produit programme d'ordinateur dans lequel sont stockées des instructions lisibles par ordinateur qui, lorsqu'elles sont exécutées par au moins une unité de traitement (301), amènent l'au moins une unité de traitement (301) à réaliser les étapes du procédé selon l'une quelconque des revendications 1 à 5.
